# EUROPÄISCHE PATENTSCHRIFT

(11) **EP 0 812 654 B1**
(45) Veröffentlichungstag und Bekanntmachung des Hinweises auf die Patenterteilung: **11.07.2001**
(21) Anmeldenummer: 97108092.4
(22) Anmeldetag: 17.05.1997
(51) Int. Cl.: B23Q 3/00

(54) **Vorrichtung und Verfahren zur Erfassung der Profilbreite eines Profilrahmens, wie Fenster-oder Türrahmen**
Method and device for detecting the profile width of a profile frame, such as window or door frames
Procédé et dispositif pour détecter la largeur d'un cadre profilé, tels que des châssis de fenêtre ou de porte

(30) Priorität: 12.06.1996 DE 19623491
(43) Veröffentlichungstag der Anmeldung: 17.12.1997
(73) Patentinhaber: ROTOX GmbH B. EISENBACH, 56858 Grenderich (DE)
(72) Erfinder: Engel, Michael, 56687 Briedel (DE)
(74) Vertreter: Müller, Eckhard, Dr.

(56) Entgegenhaltungen:
- EP-A- 0 303 103
- EP-A- 0 429 417
- EP-A- 0 460 654

## Beschreibung

Die Erfindung betrifft eine Vorrichtung zur Erfassung der Breite eines leistenförmigen Werkstückes, insbesondere eines Profilrahmens, wie Fenster- oder Türrahmen, mit einem Einzugsschlitten zum Einziehen des Werkstückes gegen einen Anschlag und mit einem Bearbeitungswerkzeug für den Profilrahmen aufweisenden Schiebeschlitten, wobei Einzugsschlitten und Schiebeschlitten zumindest aufeinanderzu und voneinander weg verfahrbar sind.

Um bei der Bearbeitung von Fenster- oder Türrahmenprofilen die Bearbeitungswerkzeuge, insbesondere die Werkzeuge zur Inneneckbzw. Außeneckbearbeitung in Position zu fahren, ist es erforderlich, die Breite des jeweils zu bearbeitenden Profilrahmens zu kennen. Diese Breite wurde bislang entweder mittels einer separaten Profilerkennungseinrichtung oder einfach durch Ablesen und Einlesen der Profildaten in die Steuerung der Vorrichtung ermittelt. Beide Methoden sind jedoch recht aufwendig, da entweder eine separate Profilerkennungsvorrichtung einzusetzen ist oder ein erhöhter Zeitaufwand für die Dateneingabe erforderlich ist.

Davon ausgehend liegt der Erfindung die Aufgabe zugrunde eine Vorrichtung zur Erfassung der Profilbreite eines Profilrahmens zu schaffen, die äußerst einfach aufgebaut ist und mit der ohne weiteres die Bearbeitungsvorrichtungen für Werkstücke, insbesondere für Profilrahmen nachrüstbar sind.

Diese Aufgabe wird nach der Erfindung im wesentlichen dadurch gelöst, daß der Einzugsschlitten ein Schaltstück und der Schiebeschlitten einen beim Heranfahren des Schiebeschlittens an den Einzugsschlitten durch das Schaltstück aktivierbaren Schalter aufweisen oder umgekehrt, wobei der Einzugsschlitten bei Anlage des Profilrahmens an dem Anschlag um einen mit der jeweiligen Profilbreite korrelierten Versatz bezüglich eines Referenzpunktes, der der Profilbreite Null entspricht, positioniert ist. Das Schaltstück bzw. der Schalter können mit relativ wenig Aufwand auch nachträglich, bspw. an einer Profilrahmenbearbeitungsmaschine angebracht werden, so daß eine einfache Nachrüstbarkeit gegeben ist. Durch eine entsprechende Anordnung und Ausbildung des Anschlages wird der Profilrahmen bei Anlage an dem Anschlag beispielsweise mit der Außenseite oder einer Außenecke bezüglich eines Referenzpunktes der Vorrichtung immer gleich positioniert, so daß durch eine Relativbewegung von Schiebeschlitten und Einzugsschlitten aufeinanderzu der mit der jeweiligen Profilbreite korrelierte Versatz des Einzugsschlittens erfaßbar ist. Gegebenenfalls ist dieser Versatz mittels einer trigonometrischen Funktion auf die Profilbreite umzurechnen.

Nach einer ersten Ausführungsform der Erfindung hat es sich als vorteilhaft erwiesen, daß eine Außenseite des am Anschlag anliegenden Profilrahmens auf den Referenzpunkt positioniert und der Einzugsschlitten mit einem Einzugshebel an der entsprechenden Innenseite des Profilrahmens anliegt. Wird in diesem Fall der Schiebeschlitten über den Referenzpunkt hinaus an den Einzugsschlitten herangefahren, so wird nach einer Aktivierung des Schalters durch das Schaltstück unmittelbar die Profilbreite des Profilrahmens meßtechnisch erfaßt.

Nach einer anderen, insbesondere auf Eckenputzmaschinen von Profilrahmen angepaßten Ausgestaltung der Erfindung ist eine Außenecke einer Eckverbindung des am Anschlag anliegenden Profilrahmens auf den Referenzpunkt positioniert, wobei der Einzugsschlitten mit einem Einzugshebel im Bereich der entsprechenden Innenecke des Profilrahmens anliegt. In diesem Fall wird der Profilrahmen zur Bearbeitung der Ecken in der Vorrichtung eingespannt, wobei in dieser Einspannposition durch ein Heranfahren des Schiebeschlittens an den Einzugsschlitten vor dem eigentlichen Bearbeitungsvorgang der Versatz des Einzugsschlittens von dem Referenzpunkt erfaßt wird. Dieser Versatz ist wiederum mit der Profilbreite korreliert und wird durch Anwendung einer trigonometrischen Funktion auf die tatsächliche Profilbreite umgerechnet.

Die Vorrichtung weist von Vorteil Bearbeitungswerkzeuge zur Bearbeitung der Eckverbindung auf. Insbesondere sind an dem Schiebeschlitten Bearbeitungswerkzeuge für die Außenecke für die Sichtflächen und/oder an dem Einzugsschlitten Bearbeitungswerke für die Inneneckbearbeitung der Eckverbindungen des Profilrahmens angeordnet. Durch diese Maßnahmen wird eine vollwertige Vorrichtung zur Bearbeitung der Eckverbindungen des Profilrahmens zur Verfügung gestellt, die sozusagen integriert eine Erfassung der Profilbreite des jeweils in der Vorrichtung eingespannten Profilrahmens ermöglicht.

Gemäß einer anderen vorteilhaften Weiterbildung der Erfindung ist der Schiebeschlitten in einem rechten Winkel zu einem Schenkel des Profilrahmens verfahrbar. In diesem Fall wird nach Überfahren des Referenzpunktes mittels des Schiebeschlittens bis zur Aktivierung des Schalters durch das Schaltstück unmittelbar die Breite des Profilrahmens gemessen, so daß der Einsatz weiterer Umrechnungsfunktionen oder dergleichen sich erübrigt.

Insbesondere für Vorrichtungen zum Bearbeiten der Eckverbindungen von Profilrahmen hat es sich nach einer weiteren Ausführungsform der Erfindung als vorteilhaft erwiesen, daß der Schiebeschlitten diagonal, insbesondere in einem Winkel von ca. 45° zu einem Schenkel bzw. einer Eckverbindung des Profilrahmens, insbesondere in Richtung der Außenecke und Innenecke einer Eckverbindung verfahrbar ist. Diese Maßnahmen erweisen sich insoweit als vorteilhaft, als der Profilrahmen zur Messung der Profilbreite wie auch zur Bearbeitung der Eckverbindungen in ein und derselben Aufspannposition verbleiben kann. Zwar wird durch den diagonalen Verfahrweg nicht unmittelbar die Breite des Profilrahmens, sondern nur ein mit dieser Breite über eine trigonometrische Funktion korrelierter Wert meßtechnisch ermittelt, jedoch kann dieser meßtechnisch ermittelte Wert ohne weiteres auf die tatsächliche Profilbreite des Profilrahmens zurückgeführt werden.

Die Vorrichtung und deren Bedienung vereinfacht sich insgesamt dadurch, daß der Einzugsschlitten und Verschiebeschlitten entlang einer gemeinsamen Achse verfahrbar sind.

Weiterhin ist nach einer anderen vorteilhaften Ausbildung der Erfindung vorgesehen, daß der Anschlag durch zwei im wesentlichen in einem rechten Winkel zueinander angeordnete, flächige Widerlager für benachbarte Schenkel des Profilrahmens gebildet ist, wobei der Referenzpunkt durch den Scheitel des Winkels gebildet wird. Dieser Referenzpunkt ergibt sich sozusagen dadurch, daß der Einzugsschlitten in eine solche Position verfahren wird, die dann vorliegen würde, wenn ein Profilrahmen mit der Profilbreite identisch Null zur Anlage an den Anschlag käme.

Die Erfindung betrifft auch ein Verfahren zur Erfassung der Profilbreite eines Profilrahmens mit einer Vorrichtung nach einem der vorhergehenden Ansprüche. Das Verfahren zeichnet sich dadurch aus, daß der Profilrahmen mittels insbesondere eines Einzugshebels eines Einzugsschlittens zur Anlage gegen einen Anschlag verfahren wird, so daß die Außenecke einer Eckverbindung des Profilrahmens auf einem Referenzpunkt zu liegen kommt und der Schiebeschlitten diagonal in Richtung des Einzugsschlittens bzw. Profilrahmens entlang der Verbindungslinie zwischen Außenecke und Innenecke der Eckverbindung verfahren wird, wobei beim überfahren des Referenzpunktes die Messung begonnen, bei Aktivierung des Schalters durch das Schaltstück die Messung beendet und anschließend eine Umrechnung des Meßwertes mittels einer trigonometrischen Funktion auf die Profilbreite durchgeführt werden. Dieses Verfahren eignet sich besonders für den Einsatz bei Putzmaschinen für Eckverbindungen bei Profilrahmen. Nachdem der Profilrahmen zur Anlage an den Anschlag gebracht worden ist, also sich bereits in der Bearbeitungsposition befindet, ist lediglich ein Verfahren des Schiebeschlittens bezüglich des Einzugsschlittens zur Erfassung der Profilbreite des Rahmens erforderlich. Anschließend werden dann die Bearbeitungswerkzeuge, welche sich an dem Schiebeschlitten und gegebenenfalls Einzugsschlitten befinden, entsprechend der erfaßten Profilbreite des Profilrahmens gesteuert und positioniert.

Eine Ausführungsform des erfindungsgemäßen Verfahrens sieht vor, daß der Schiebeschlitten nach Beendigung der Messung sofort in eine Bearbeitungsposition für den Profilrahmen verfahren wird, so daß unmittelbar im Anschluß an die Beendigung des Meßvorganges die Bearbeitung aufgenommen werden kann.

Weiterhin hat es sich als vorteilhaft erwiesen, daß die Festlegung des Referenzwertes in der Weise erfolgt, daß der Einzugsschlitten ohne Profilrahmen in eine solche Position, die einer Profilbreite identisch Null entspricht und dann der Schiebeschlitten in Richtung des Eingangsschlittens verfahren werden, bis eine Aktivierung des Schalters mittels des Schaltelementes erfolgt. Somit ist gewährleistet, daß bei einer ersten Durchführung des Verfahrens oder auch bei gelegentlichen späteren Justierungen der Referenzpunkt einfach und genau festgelegt werden kann.

Weitere Ziele, Merkmale, Vorteile und Anwendungsmöglichkeiten der vorliegenden Erfindung ergeben sich aus der nachfolgenden Beschreibung eines Ausführungsbeispieles anhand der Zeichnungen.

Es zeigen:
- Figur 1: eine Draufsicht auf ein Ausführungsbeispiel der erfindungsgemäßen Vorrichtung zur Erfassung der Profilbreite ohne Profilrahmen,
- Figur 2: die Vorrichtung gemäß Figur 1 mit einem in Anlage gegen den Anschlag befindlichen Profilrahmen,

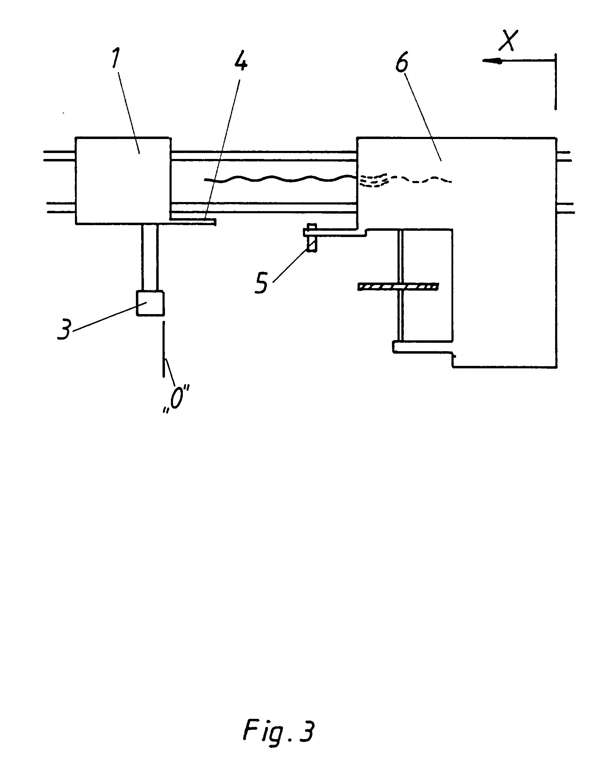

- Figur 3: eine Seitenansicht der Vorrichtung nach Figur 1 und

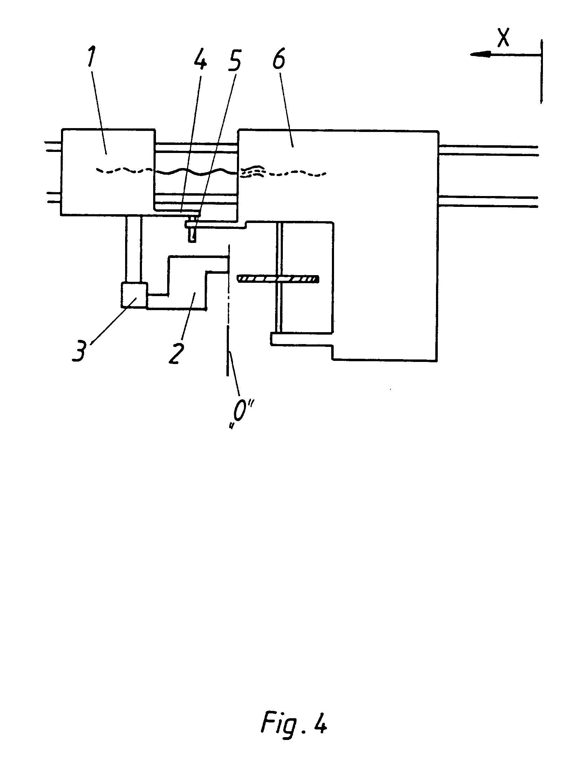

- Figur 4: eine Seitenansicht der Vorrichtung gemäß Figur 2.

Die Vorrichtung weist einen Einzugsschlitten 1 auf, mit dem das zu bearbeitende Werkstück, vorliegend ein Profilrahmen 2, in die Bearbeitungsmaschine eingezogen werden kann. Eine derartige Bearbeitungsmaschine zur Bearbeitung insbesondere der Eckverbindungen 14 des Profilrahmens 2 ist bspw. in der DE-PS 30 20 739 beschrieben. Der Profilrahmen 2 wird mittels eines mit dem Einzugschlitten 1 verbundenen Einzughebel 3 unabhängig von der Profilbreite 8 des Profilrahmens 2 auf einen Referenzpunkt 0 geschoben.

Mit dem Einzugsschlitten 1 ist ein Schaltstück 4 verbunden, welches mit einem Schalter 5 an einem Schiebeschlitten 6 in Wirkstellung tritt. Es versteht sich, daß der Schalter 5 auch am Einzugsschlitten 1 und das Schaltstück 4 am Schiebeschlitten 6 angeordnet sein kann.

An dem Schiebeschlitten 6 sind Bearbeitungswerkzeuge für die Außeneckbearbeitung und/oder Inneneckbearbeitung des Profilrahmens 2 und an dem Einzugsschlitten 1 können Bearbeitungswerkzeuge für die Inneneckbearbeitung angeordnet sein.

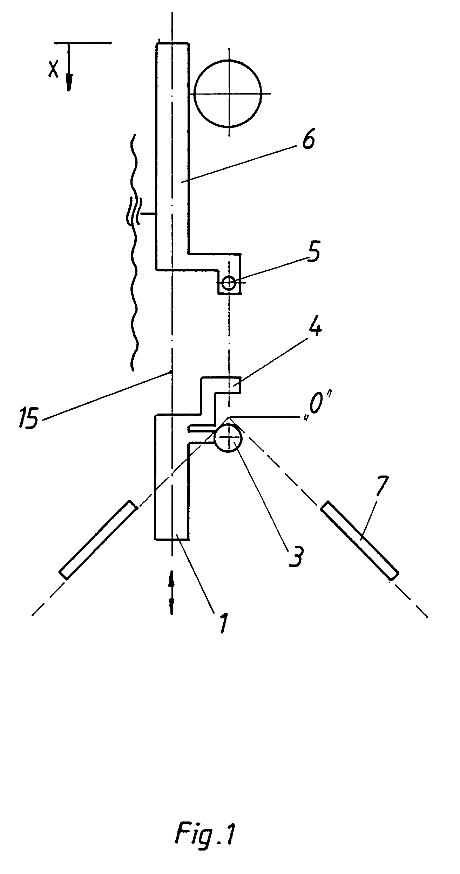

Für die Festlegung des Referenzpunktes 0 werden Einzugsschlitten 1 und Schiebeschlitten 6 in die in Figur 1 dargestellte Position verfahren, wodurch der Referenzpunkt 0 festgelegt wird. Befindet sich nun ein Profilrahmen 2 in der Aufnahme der Bearbeitungsvorrichtung, so wird der Profilrahmen 2 mit dem Einzugsschlitten 1 in die Vorrichtung eingezogen bzw. geschoben, so daß die Außenecke 11 des zu bearbeitenden Profilrahmens 2 an dem durch den Anschlag 7 definierten Referenzpunkt 0 zu liegen kommt.

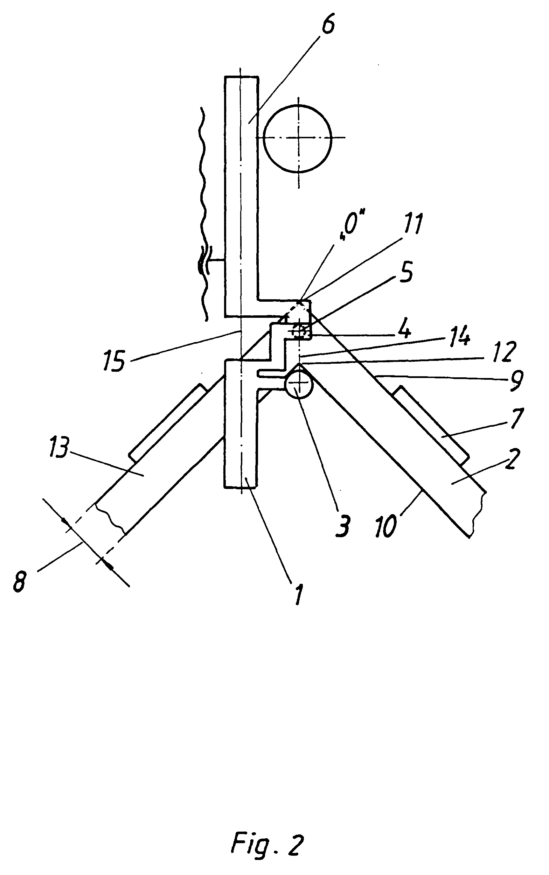

Sodann wird der Schiebeschlitten 6 diagonal zum Profilrahmen 2 bzw. parallel zur Einzugsbewegung des Einzugsschlittens 1 entlang der Achse 15 zum Profilrahmen 2 hin verschoben, bis der Schalter 5 durch das Schaltstück 4 betätigt wird, wie dies der Figur 2 zu entnehmen ist. Dabei überfährt der Schiebeschlitten 6 den Referenzpunkt 0 und beginnt mit der Messung der Wegstrecke, wobei diese Messung bei Betätigung des Schalters 5 beendet wird. Die maßliche Bestimmung des Nullpunktes sowie der Wegstrecke geschieht mit Hilfe einer Positionsanzeige der Antriebsachse, welche den Schiebeschlitten 6 bewegt. Alternativ kann auch ein externes Meßsystem mit dem Schiebeschlitten 6 zusammenwirken.

Die dabei gewonnene Distanz wird mittels einer trigonometrischen Funktion, bspw. einer Sinusfunktion umgerechnet, um die tatsächliche Profilbreite 8 des Profilrahmens 2 zu ermitteln. Danach kann der Schiebeschlitten 6 direkt in die Bearbeitungsposition fahren, was jedoch nicht zwingend erforderlich ist. Aufgrund der Erfassung der Profilbreite 8 des Profilrahmens 2 können nun die einzelnen Bearbeitungswerkzeuge in ihre entsprechende, von der Profilbreite 8 abhängige Position gebracht werden, worauf dann der eigentliche Bearbeitungsvorgang beginnt.

Alternativ ist es auch möglich, mittels des Einzugsschlittens 1 die Profilbreite 8 unmittelbar anhand der Verfahrstrecke zu messen. Hierzu wird dann der Referenzpunkt 0 bevorzugt auf der Außenseite 9 eines Schenkels 13 des Profilrahmens 2 angeordnet, wobei der Einzugsschlitten 1 bzw. dessen Einzughebel 3 an der Innenseite 10 anliegen. Wird hingegen die Profilbreite 8 über einen diagonalen Verfahrweg erfaßt, liegt der Einzugshebel 3 des Einzugsschlitten 1 im Bereich einer Innenecke 12 des Profilrahmens 2 an.

Insgesamt wird durch die erfindungsgemäße Vorrichtung bzw. das erfindungsgemäße Verfahren erreicht, daß die für die Bearbeitung der Eckverbindung 14 des Profilrahmens 2 sowieso erforderlichen Bewegungseinheiten zusätzlich dazu benutzt werden, um die Profilbreite 8 des Profilrahmens 2 vor Beginn der eigentlichen Bearbeitung zu ermitteln. Hierzu sind lediglich gegenüber der herkömmlichen Bearbeitungsvorrichtung das Schaltstück 4 sowie der Schalter 5 erforderlich, wobei das Schaltstück 4 am Einzugsschlitten 1 und der Schalter 5 am Schiebeschlitten 6, oder umgekehrt, positioniert werden. Eine separate Meßeinrichtung oder eine von Hand durchzuführende Messung mit einer Eingabe der Daten in einen Rechner ist nicht erforderlich.

Der Referenzpunkt 0 bzw. die Nullpunktlage für den Profilrahmen 2, insbesondere eine Außenecke 11, wird durch eine entsprechende Anordnung der Widerlager des Anschlags 7, insbesondere den Schnittpunkt der längs der Anschläge 7 verlaufenden Geraden definiert, welche an der Bearbeitungsmaschine angeordnet sind und gegen welche die Außenseite 9 des Profilrahmens 2 zur Anlage kommt.

### Bezugszeichenliste

- 0 -: Referenzpunkt
- 1 -: Einzugsschlitten
- 2 -: Profilrahmen
- 3 -: Einzughebel
- 4 -: -Schaltstück
- 5 -: Schalter
- 6 -: - Schiebeschlitten
- 7 -: Anschlag
- 8 -: Profilbreite
- 9 -: Außenseite
- 10 -: Innenseite
- 11 -: Außenecke
- 12 -: Innenecke
- 13 -: Schenkel
- 14 -: Eckverbindung
- 15 -: Achse

## Patentansprüche

1. Vorrichtung zur Erfassung der Breite (8) eines leistenförmigen Werkstückes, insbesondere eines Profilrahmens (2), wie Fenster- oder Türrahmen, mit einem Einzugsschlitten (1) zum Einziehen des Profilrahmens (2) gegen einen Anschlag (7) und mit einem Bearbeitungswerkzeug für den Profilrahmen (2) aufweisenden Schiebeschlitten (6), wobei Einzugsschlitten (1) und Schiebeschlitten (6) zumindest aufeinanderzu und voneinander weg verfahrbar sind, dadurch gekennzeichnet, daß der Einzugsschlitten (1) ein Schaltstück (4) und der Schiebeschlitten (6) einen bei dem Heranfahren des Schiebeschlittens (6) an den Einzugsschlitten (1) durch das Schaltstück (4) aktivierbaren Schalter (5) aufweisen oder umgekehrt, wobei der Einzugsschlitten (1) bei Anlage des Profilrahmens (2) an dem Anschlag (7) um einen mit der jeweiligen Profilbreite (8) korrelierten Versatz bezüglich eines Referenzpunktes (0), der der Profilbreite (8) identisch Null entspricht, positioniert ist.

2. Vorrichtung nach Anspruch 1, dadurch gekennzeichnet, daß eine Außenseite (9) des am Anschlag (7) anliegenden Profilrahmens (2) auf den Referenzpunkt(0) positioniert und der Einzugsschlitten (1) mit einem Einzugshebel (3) an der entsprechenden Innenseite (10) des Profilrahmens (2) anliegt.

3. Vorrichtung nach Anspruch 1, dadurch gekennzeichnet, daß eine Außenecke (11) einer Eckverbindung (14) des am Anschlag (7) anliegenden Profilrahmens (2) auf den Referenzpunkt (0) positioniert ist und der Einzugsschlitten (1) mit einem Einzugshebel (3) im Bereich der entsprechenden Innenecke (12) des Profilrahmens (2) anliegt.

4. Vorrichtung nach einem der vorhergehenden Ansprüche, dadurch gekennzeichnet, daß der Schiebeschlitten (6) Bearbeitungswerkzeuge für die Außeneckbearbeitung und/oder der Einzugsschlitten (1) Bearbeitungswerkzeuge für die Inneneckbearbeitung des Profilrahmens (2) aufweisen.

5. Vorrichtung nach einem der Ansprüche 1 oder 2 , dadurch gekennzeichnet, daß der Schiebeschlitten (6) in einem rechten Winkel zu einem Schenkel (13) des Profilrahmens (2) verfahrbar ist.

6. Vorrichtung nach einem der Ansprüche 1 oder 3, dadurch gekennzeichnet, daß der Schiebeschlitten (6) diagonal, insbesondere in einem Winkel von ca. 45° zu einem Schenkel (13) bzw. einer Eckverbindung (14) des Profilrahmens (2), insbesondere in Richtung der Außenecke (11) und Innenecke (12) einer Eckverbindung (14) verfahrbar ist.

7. Vorrichtung nach Anspruch 6, dadurch gekennzeichnet, daß der Versatz mittels einer Umrechnungsfunktion, insbesondere einer trigonometrischen Funktion, in die Profilbreite (8) umgerechnet wird.

8. Vorrichtung nach einem der vorhergehenden Ansprüche, dadurch gekennzeichnet, daß der Einzugsschlitten (1) und Verschiebeschlitten (6) entlang einer gemeinsamen Achse (15) verfahrbar sind.

9. Vorrichtung nach einem der vorhergehenden Ansprüche, dadurch gekennzeichnet, daß der Anschlag (7) durch zwei im wesentlichen in einem rechten Winkel zueinander angeordnete, flächige Widerlager für benachbarte Schenkel (13) des Profilrahmens (2) gebildet ist, wobei der Referenzpunkt (0) durch den Scheitel des Winkels gebildet ist.

10. Verfahren zur Erfassung der Profilbreite (8) eines Profilrahmens (2) mit einer Vorrichtung nach einem der vorhergehenden Ansprüche, dadurch gekennzeichnet, daß der Profilrahmen (2) mittels insbesondere eines Einzugshebels (3) eines Einzugsschlittens (1) zur Anlage gegen einen Anschlag (7) verfahren wird, so daß die Außenecke (11) einer Eckverbindung (14) des Profilrahmens (2) auf einem Referenzpunkt (0) zu liegen kommt, und der Schiebeschlitten (6) diagonal in Richtung des Einzugsschlittens (1) bzw. Profilrahmens (2) entlang der Verbindungslinie zwischen Außenecke (11) und Innenecke (12) der Eckverbindung (14) verfahren wird, wobei beim Überfahren des Referenzpunktes (0) die Messung begonnen, bei Aktivierung des Schalters (5) durch das Schaltstück (4) die Messung beendet und anschließend eine Umrechnung des Meßwertes mittels einer trigonometrischen Funktion auf die Profilbreite (8) durchgeführt werden.

11. Verfahren nach Anspruch 10, dadurch gekennzeichnet, daß der Schiebeschlitten (6) nach Beendigung der Messung direkt in eine Bearbeitungsposition für den Profilrahmen (2) verfahren wird.

12. Verfahren nach Anspruch 10 oder 11, dadurch gekennzeichnet, daß die Festlegung des Verfahrenswertes Null in der Weise erfolgt, daß der Einzugsschlitten (1) ohne Profilrahmen (2) in eine solche Position, die einer Profilbreite (8) identisch Null entspricht, und dann der Schiebeschlitten (6) in Richtung des Einzugsschlittens (1) verfahren werden, bis eine Aktivierung des Schalters (5) mittels des Schaltstücks (4) erfolgt.

## Claims

1. Device for detection of the width (8) of a strip-shaped workpiece, particularly of a profile frame (2), such as a window frame or door frame, comprising a drawing-in slide (1) for drawing in the profile frame (2) against an abutment (7) and a displacing slide (6) having a processing tool for the profile frame (2), wherein drawing-in slide (1) and displacing slide (6) are movable at least towards one another and away from one another, characterised in that the drawing-in slide (1) comprises a switching member (4) and the displacing slide (6) comprises a switch (5), which is activatable by the switching member (4) on movement of the displacing slide (6) against the drawing-in slide (1), or conversely, wherein the drawing-in slide (1) on contact of the profile frame (2) against the abutment (7) is positioned by an offset, which is correlated with the respective profile width (8), with respect to a reference point (0) which corresponds to the profile width (8) identical to zero.

2. Device according to claim 1, characterised in that an outer side (9) of the profile frame (2) bearing against the abutment (7) is positioned at the reference point (0) and the drawing-in slide (1) bears by a drawing-in lever (3) against the corresponding inner side (10) of the profile frame (2).

3. Device according to claim 1, characterised in that an outer corner (11) of a corner connection (14) of the profile frame (2) bearing against the abutment (7) is positioned at the reference point (0) and the drawing-in slide (1) bears by a drawing-in lever (3) in the region of the corresponding inner corner (12) of the profile frame (2).

4. Device according to one of the preceding claims, characterised in that the displacing slide (6) has processing tools for the outer corner processing of the profile frame (2) and/or the drawing-in slide (1) has processing tools for the inner corner processing of the profile frame (2).

5. Device according to one of claims 1 and 2, characterised in that the displacing slide (6) is movable at a right angle to a limb (13) of the profile frame (2).

6. Device according to one of claims 1 and 3, characterised in that the displacing slide (6) is movable diagonally, especially at an angle of about 45°, relative to a limb (13) or a corner connection (14) of the profile frame (2), especially in the direction of the outer corner (11) and inner corner (12) of a corner connection (14).

7. Device according to claim 6, characterised in that the offset is recomputed by means of a recomputation function, especially a trigonometric function, into the profile width (8).

8. Device according to one of the preceding claims, characterised in that the drawing-in slide (1) and displacing slide (6) are movable along a common axis (15).

9. Device according to one of the preceding claims, characterised in that the abutment (7) is formed by two areal counter-bearings, which are arranged substantially at right angles to one another, for adjacent limbs (13) of the profile frame (2), wherein the reference point (0) is formed by the apex of the angle.

10. Method of detecting the profile width (8) of a profile frame (2) by a device according to one of the preceding claims, characterised in that the profile frame (2) is moved by means of, in particular, a drawing-in lever (3) of a drawing-in slide (1) into abutment against an abutment (7) so that the outer corner (11) of a corner connection (14) of the profile frame (2) comes to lie at a reference point (0), and the displacing slide (6) is moved diagonally in the direction of the drawing-in slide (1) or profile frame (2) along the connecting line between outer corner (11) and inner corner (12) of the corner connection (14), wherein the measurement is commenced on travelling past the reference point (0), the measurement is concluded on activation of the switch (5) by the switching member (4) and subsequently a recomputation of the measurement value into the profile width (8) is carried out by means of a trigonometric function.

11. Method according to claim 10, characterised in that the displacing slide (6) is moved directly into a processing position for the profile frame (2) after conclusion of the ) measuring.

12. Method according to claim 10 or 11, characterised in that the establishing of the method value zero is carried out in the manner that the drawing-in slide (1) without profile frame (2) is moved into a position such as corresponds to a profile width (8) identical to zero and then the displacing slide (6) is moved in the direction of the drawing-in slide (1) until an activation of the switch (5) is effected by means of the switching member (4).

## Revendications

1. Dispositif pour obtenir la largeur (8) d'une pièce en forme de barre, en particulier d'un châssis en profilé (2) tel qu'un châssis de fenêtre ou de porte, comprenant un chariot d'insertion (1) destiné à attirer le châssis en profilé (2) contre une butée (7) et un chariot coulissant (6) qui présente un outil de travail pour le châssis en profilé (2), le chariot d'insertion (1) et le chariot coulissant (6) pouvant être déplacés au moins l'un vers l'autre, ainsi que l'un à l'opposé de l'autre, caractérisé en ce que le chariot d'insertion (1) présente un élément de commande (4) et le chariot coulissant (6) un interrupteur (5), ou inversement, interrupteur qui peut être activé par l'élément de commande (4) lors de l'arrivée du chariot coulissant (6) contre le chariot d'insertion (1), cependant que, lorsque le châssis en profilé (2) est en appui contre la butée (7), le chariot d'insertion (1) est positionné avec un décalage, fonction de la largeur (8) du profilé en question, par rapport à un point de référence (0) qui correspond à une largeur du profilé égale à zéro.

2. Dispositif selon la revendication 1, caractérisé en ce qu'un côté extérieur (9) du châssis en profilé (2) en appui contre la butée (7) est positionné sur le point de référence (0) et que le chariot d'insertion (1) est en appui par son levier d'insertion (3) contre le côté intérieur correspondant (10) du châssis en profilé (2).

3. Dispositif selon la revendication 1, caractérisé en ce qu'un angle extérieur (11) d'un joint d'angle (14) du châssis en profilé (2) en appui contre la butée (7) est positionné sur le point de référence (0) et que le chariot d'insertion (1) est alors en appui par son levier d'insertion (3) dans la région de l'angle intérieur correspondant (12) du châssis en profilé.

4. Dispositif selon une des revendications précédentes, caractérisé en ce que le chariot coulissant (6) porte des outils de travail pour le travail de l'angle extérieur qui sont prévus pour les surfaces visibles et/ou le chariot d'insertion (1) porte des outils de travail pour le travail de l'angle intérieur du châssis en profilé (2).

5. Dispositif selon une des revendications 1 ou 2, caractérisé en ce que le chariot coulissant (6) peut être déplacé à angle droit par rapport à une branche (13) du châssis en profilé (2).

6. Dispositif selon une des revendications 1 ou 3, caractérisé en ce que le chariot coulissant (6) peut être déplacé en oblique, en particulier en formant un angle d'environ 45° avec une branche (13) ou un joint d'angle (14) du châssis en profilé (2), en particulier en direction de l'angle extérieur (11) et de l'angle intérieur (12) d'un joint d'angle (14).

7. Dispositif selon la revendication 6, caractérisé en ce que le décalage est converti en la largeur (8) du profilé par application d'une fonction de conversion, en particulier d'une fonction trigonométrique.

8. Dispositif selon une des revendications précédentes, caractérisé en ce que le chariot d'insertion (1) et le chariot coulissant (6) peuvent se déplacer le long d'un axe commun (15).

9. Dispositif selon une des revendications précédentes, caractérisé en ce que la butée (7) est formée par deux arrêts de forme plate, disposés sensiblement à angle droit l'un par rapport à l'autre, pour recevoir des branches adjacentes (13) du châssis en profilé (2), le point de référence étant formé par le sommet de l'angle.

10. Procédé pour obtenir la largeur (8) du profilé d'un châssis en profilé (2) avec un dispositif selon une des revendications précédentes, caractérisé en ce qu'on place le châssis en profilé (2), en particulier au moyen d'un levier d'insertion (3) appartenant à un chariot d'insertion (1), en appui contre une butée (7), de sorte que l'angle extérieur (11) d'un joint d'angle (14) du châssis en profilé (2) vient se placer sur un point de référence (0) et qu'on déplace le chariot coulissant (6) en oblique en direction du chariot d'insertion (1) ou du châssis en profilé (2) le long de la ligne de jonction entre l'angle extérieur (11) et l'angle intérieur (12) du joint d'angle (14), la mesure commençant lors du franchissement du point de référence (0) et se terminant lors de l'activation de l'interrupteur (5) par l'élément de commande (4), tandis qu'ensuite, il s'effectue une conversion de la valeur mesurée en la largeur (8) du profilé par application d'une fonction trigonométrique.

11. Procédé selon la revendication 10, caractérisé en ce qu'après l'achèvement de la mesure, le chariot coulissant (6) est directement amené dans une position de travail pour le châssis en profilé (2).

12. Procédé selon la revendication 10 ou 11, caractérisé en ce que la fixation de la valeur de référence zéro s'effectue par le fait que le chariot d'insertion (1), sans le châssis en profilé (2), est placé dans une position qui correspond à une largeur (8) de profilé égale à zéro et qu'ensuite, le chariot coulissant (6) est déplacé en direction du chariot d'insertion (1) jusqu'à ce qu'il se produise une activation de l'interrupteur (5) au moyen de l'élément de commande (4).
